(19) Europäisches Patentamt
European Patent Office
Office européen des brevets

(11) Veröffentlichungsnummer: **0 250 731**
**B1**

# (12) EUROPÄISCHE PATENTSCHRIFT

(45) Veröffentlichungstag der Patentschrift: **28.02.90**

(51) Int. Cl.⁴: **B60R 22/20**

(21) Anmeldenummer: **87105016.7**

(22) Anmeldetag: **04.04.87**

(54) **Höhenverstellbarer Umlenkbeschlag für Sicherheitsgurte zur Anordnung in Kraftfahrzeugen.**

(30) Priorität: **05.06.86 DE 3618973**
**26.06.86 DE 3621380**
**17.03.87 DE 3708564**

(43) Veröffentlichungstag der Anmeldung:
**07.01.88 Patentblatt 88/1**

(45) Bekanntmachung des Hinweises auf die Patenterteilung:
**28.02.90 Patentblatt 90/9**

(84) Benannte Vertragsstaaten:
**AT BE CH DE ES FR GB GR IT LI LU NL SE**

(56) Entgegenhaltungen:
**DE-A- 2 625 572**
**GB-A- 2 014 433**

(73) Patentinhaber: **Schmidt, Gudrun, Dr.**
**Paul-Müller-Strasse 36, D-5940 Lennestadt 11 (DE)**

(72) Erfinder: **Schmidt, Gudrun, Dr. Paul-Müller-Strasse 36,**
**D-5940 Lennestadt 11 (DE)**

(74) Vertreter: **Köchling, Conrad-Joachim et al,**
**Patentanwälte Dipl.-Ing. Conrad Köchling, Dipl.-Ing. Conrad-Joachim Köchling Fleyer Strasse 135,**
**D-5800 Hagen 1 (DE)**

**EP 0 250 731 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen höhenverstellbaren Umlenkbeschlag für Sicherheitsgurte zur Anordnung in Kraftfahrzeugen, bestehend aus einer etwa vertikal sich erstreckend anzuordnenden Schiene mit einer Mehrzahl in Richtung ihrer Längserstreckung mit Abstand hintereinander angeordneten Rasten sowie aus einem an der Schiene längs dieser verstellbar gehalterten, in die Rasten der Schiene lösbar eingreifbare Rastnasen aufweisenden und gegen Federkraft aus den Rasten manuell aushebbaren Schlitten, letzterer zudem eine zu seiner Verschieberichtung quer gerichtete Gewindebohrung aufweist, in die eine die Gurt umlenkeinrichtung halternde Befestigungsschraube eingeschraubt ist, wobei die Schiene ein längs dieser sich austreckendes Langloch aufweist und der Schlitten an die Rückseite der Schiene angelegt ist. Ein solcher Umlenkbeschlag ist aus der DE-A 2 625 572 bekannt.

Bei einem aus der Praxis bekannten Umlenkbeschlag dieser Art hat die Schiene an einem Längsrand angeschnittene, längsseitig offene, mit Abstand hintereinander angeordnete Rasten und die zwischen den Rasten befindlichen Teile der Schiene sind zur Schienenrückseite hin abgebogen. Der Schlitten besteht aus einem zu einem endlosen, etwa ovalen Ring zusammengeschweißten Blechstreifen, dessen große lichte Weite größer als die Breite der Schiene ist und dessen kleine lichte Weite mindestens der Dicke der Schiene einschließlich der zwischen den Rastausnehmungen befindlichen, abewinkelten Tiele der Schiene entspricht.

Am Schlitten sind den Rasten der Schiene angepaßte Rastnasen angeformt. Durch den Schlitten ist die Schiene so längs verstellbar hindurchgesteckt, daß die Rastnasen den Rastausnehmungen gegenübergestellt werden können. Außerdem sind in die Durchgriffsöffnung des Schlittens eine vorgefertigte Schienenführung aus Kunststoff und eine auf die Schiene wirksame, vorgefertigte Blattfeder so eingefügt, daß bei einander gegenüberstehenden Rastelementen diese von der Blattfeder beeinflußt ineinandergreifen. Zudem ist an der Frontseite des Schlittens eine Innengewinde aufweisende Muffe zum Anschluß der Gurtumlenkeinrichtung angeschweißt.

Hierbei besteht aber der Nachteil, daß der Schlitten unbeabsichtigter Weise auf den rastenlosen Einsteckendteil der Schiene aufgeschoben werden kann und dann eine exakte Höhenverstellung des Schlittens relativ zur Schiene nicht mehr gegeben ist. Außerdem ist die Herstellung dieser Vorrichtung und die Montage deren Einzelteile relativ schwierig, zeitaufwendig und teuer.

Aufgabe der Erfindung ist es nun, eine Vorrichtung der im Oberbegriff des Anspruches 1 angegebenen Art derart zu verbessern, daß sowohl eine erhebliche Vereinfachung und Verbilligung der Herstellung und der Montage als auch eine Erhöhung der Funktionssicherheit erreichbar ist.

Die Lösung dieser Aufgabe ist dadurch gekennzeichnet, daß der Schlitten einen durch das Langloch hindurchgesteckten, im Langloch längs verstellbar geführten und mit seinem freien Ende an der Frontseite der Schiene sich abstützenden, ersten Endteil aufweist, der andere zweite Endteil des Schlittens gegen Federkraft um eine zur Schienen-Längserstreckung quer verlaufende Achse von der Schiene begrenzt abkippbar gehaltert ist und mit der Schiene zusammenwirkende Rastnasen aufweist, zudem am Schlitten zwischen den beiden Endteilen eine das Schienen-Langloch durchgreifender und die zum Anschluß der Gurtumlenkeinrichtung bestimmte Gewindebohrung aufweisender, zweiter Führungsteil vorgesehen ist und daß die Rasten der Schiene über den gesamten Verschiebeweg des Schlittens verteilt angeordnet sind.

Durch diese Maßnahmen besteht die erfindungsgemäße Vorrichtung nunmehr im wesentlichen aus nur drei Einzelteilen, nämlich einer Schiene, einem Schlitten und aus einem Federelement. Auch hat der Schlitten eine wesentlich einfachere Raumform als bislang, woraus sich auch eine erheblich einfachere und billigere Herstellung und Montage ergibt. Zugleich ist sichergestellt, daß über den gesamten Verschiebeweg des Schlittens relativ zur ortsfest zu halternden Schiene eine formschlüssige Verrastung des Schlittens mit der Schiene erreichbar ist.

Zur weiteren Erhöhung der Funktionssicherheit ist es vorteilhaft, wenn der erste Endteil des Schlittens dem unteren Ende der Schiene zugewandt angeordnet ist.

Eine sowohl fertigungstechnisch als auch montagegünstige Ausgestaltung des Schlittens besteht darin, daß dieser aus einem im wensentlichen ebenen Blechzuschnitt besteht, dessen Dicke kleiner als die Breite des Schienen-Langloches ist, ferner der erste Endteil durch einen angeschnittenen hammerkopfförmigen verkröpften Vorsprung gebildet ist, der das Langloch durchsetzt und mit seinem erweiternden Kopf an der Außenseite der Schiene anliegt, und daß am anderen zweiten Endteil des Blechzuschnittes mindestens eine Rastnase angeordnet, insbesondere angeformt ist, und vorzugsweise zudem der zweite Führungsteil des Schlittens als von diesem quer abstrebende, insbesondere zylindrische Hülse ausgebildet ist, deren axial verlaufende Bohrung als Gewindebohrung ausgebildet ist, wobei die Hülse am Schlitten angeformt sein kann.

Weiterhin ist es zur Erzielung einer hochbelastbaren lösbaren Kupplung des Schlittens mit der Schiene vorteilhaft, wenn in der Schiene beiderseits des Langloches je eine längs der Schiene verlaufende Reihe Rasten angeordnet sind, und daß am zweiten Endteil des Schlittens zwei mit Abstand nebeneinander angeordnete, zur Schiene hin abstrebende, nach Lage, Form und Abmessungen den Rasten angepaßte Rastnasen angeformt sind.

Hierzu sind unter Umständen bevorzugte Varianten in den Ansprüchen 7 bis 9 offenbart.

Eine bevorzugte, sowohl hinsichtlich der Herstellung als auch der Montage besonders günstige sowie eine lagerichtige und lagesichere Gestaltung und Anordnung des eine Verrastung des Schlittens mit der Schiene erzwingenden Federelementes ist in den Ansprüchen 10 und 11 gekennzeichnet.

Zur weiteren Erhöhung der Funktionssicherheit ist vorteilhaft, wenn das Federelement rückseitig des Schlittens gehaltert ist und sich unter Federvorspannung an einem an der Schiene und mit dem Schlitten synchron längs verstellbar gehalterten Widerlager abstützt.

Dies hat den Vorteil, daß nunmehr das Federelement berührungslos zur Rastschiene angeordnet ist und somit auch nicht beim Verstellen des Schlittens relativ zur Rastschiene durch letztere beeinflußt aus einer Sollage verstellt werden kann.

Zudem ist es im Sinne der Aufgabe förderlich, wenn als Federelement eine Blattfeder angeordnet ist, die angeformte und am Schlitten angreifende Klammern aufweist.

Sowohl fertigungstechnisch als auch montagegünstige Gestaltungen des Federelementes und des Federwiderlagers sind in den Ansprüchen 14 bis 16 offenbart.

Eine vorteilhafte Weiterbildung zur Verbesserung der Geradführung des Schlittens an der Rasten aufweisenden Schiene ist im Anspruch 17 gekennzeichnet.

Eine Alternative zur weiteren Vereinfachung der Herstellung und der Montage sowie auch zur Erhöhung der Funktionssicherheit eines höhenverstellbaren Umlenkbeschlages für Sicherheitsgurte zur Anordnung in Kraftfahrzeugen, bestehend aus einer Rasten aufweisenden Schiene und einem länglichen, an letzterer längs dieser verstellbar gehalterten und mittels Federkraft in die Rasten der Schiene lösbar eingreifenden und eine Gurtumlenkeinrichtung tragenden Schlitten ist dadurch gekennzeichnet, daß der eine Endteil des Schlittens um die Dicke der Schiene verkröpft ist, der Schlitten im Bereich der Abkröpfung eine Schienen-Durchstecköffnung aufweist, durch welche die Schiene so durchgesteckt ist, daß der eine abgekröpfte Endteil des Schlittens an der Frontseite der Schiene anliegt, während der andere Schlittenendteil sich an der Rückseite der Schiene abstützt, zumindest an einem Schlittenendteil in Rastlöcher der Schiene eingreifende Rastnasen angeordnet sind und die Gurtumlenkeinrichtung am zweiten Schlittenendteil angreifend angeordnet ist.

Weitere, vorteilhafte Merkmale dieser Erfindung sind in den Ansprüche 19 bis 22 offenbart.

Auch diese Vorrichtung kann einerseits einfach und bequem und zwar lediglich durch Kippen des Schlittens um eine zu dessen Verstellrichtung rechtwinklig verlaufende Kante längs der Rastschiene verstellt werden. Andererseits werden bei Zugbelastung des Sicherheitsgurtes die Rastnasen des Schlittens zwangsläufig in die Sperrstellung gedrängt. Darüber hinaus entfällt hierbei die bislang erforderliche Schraubverbindung zwischen dem Schlitten und der Gurtumlenkeinrichtung.

Um auch bei überhöhter Belastung des Umlenkbeschlages und einer daraus resultierenden Durchbiegung und Verwendung der Schiene dennoch einen sicheren Eingriff der Rastnasen aufrechtzuerhalten, wird vorgeschlagen, am Schlitten eine frontseitig der Schiene angelegte und längs der Schiene verstellbar geführte formstabile Spange zu haltern, welche beide Längsränder der Schiene umfassende Endteile aufweist und daß der Schlitten mit seiner Frontseite der Rückseite der Spange gegenüber angeordnet ist, wobei vorzugsweise zudem die Spange und deren die Längsrandteile der Schiene umfassen den Endteile etwa den Bereich zweier benachbarter Rasten der Schiene entsprechende Länge aufweisen und daß insbesondere zudem die die Längsrandteile der Schiene umfassenden Endteile der Spange mindestens annähernd niveaugleich zu den Rastnasen des Schlittens angeordnet sind.

Durch diese Maßnahmen wird bei überhöhter Belastung des Umlenkbeschlages einer daraus sich ergebenden, von der Urform abweichenden Deformierung zumindest der Schiene im Bereich der Spange weitgehend entgegengewirkt, so daß auch bei deformierter Schiene die Rastnasen des Schlittens auch dann noch ausreichend tief in die Rasten der Schiene einzugreifen vermögen.

Eine sowohl fertigungstechnisch als auch montagegünstige Ausgestaltung besteht darin, daß die Spange am Schlitten mittels der Befestigungsschraube der Gurtumlenkeinrichtung gehaltert ist, insbesondere derart, daß die Befestigungsschraube einen dieser angepaßten Durchbruch der Spange durchgreift und daß an der Befestigungsschraube eine mit dem Durchbruchsrandteil der Spange zusammenwirkende und den Kippweg des Schlittens begrenzenden Schulter angeordnet ist.

Dabei ist es im Sinne der Aufgabe noch vorteilhaft, wenn der Schlitten zwei Paar in Längsererstreckung der Schiene mit Abstand hintereinander angeordnete Rastnasen aufweist.

Eine vorteilhafte, die Funktion des Umlenkbeschlages weiterhin verbessernde Gestaltung besteht darin, daß zwischen der Frontseite der Spange und der Gurtumlenkeinrichtung eine mit Vorspannung angeordnete Biegefeder angeordnet ist, die zum Langloch der Schiene hin umgebogene, das Langloch durchgreifende und am Schlitten angreifende Endteile aufweist.

Hierdurch ist nunmehr das Federelement relativ zur Schiene berührungslos angeordnet. Demzufolge ergeben sich auch keine Relativverschiebungen zwischen dem Federelement und der Schiene, die ansonsten zur Lageveränderung des Federelementes aus der Sollage führung können.

Weitere, vorteilhafte Ausgestaltungen des Federelementes und deren Anordnung sind in den Ansprüchen 28 und 29 gekennzeichnet.

Eine vorteilhafte und unter Umständen bevorzugte Weiterentwicklung besteht darin, daß die Schiene samt Langloch und Rasten durch Teile eines Fahrzeughohlträgers gebildet sind und daß im Fahr zeughohlträger nahe des Langloches eine Schlitten-Montageöffnung angeordnet ist, so daß sich die ansonsten erforderliche Herstellung einer Schiene erübrigt.

Weitere vorteilhafte Ausgestaltungen sind hierzu in den Ansprüchen 31 bis 36 gekennzeichnet.

Ausführungsbeispiele der Erfindung sind in den Zeichnungen dargestellt und werden im folgenden näher beschrieben.

Es zeigt:

Fig. 1 einen höheneinstellbaren Umlenkbeschlag für Sicherheitsgurte in Explosionsdarstellung;

Fig. 2 und 3 weitere Ausführungsformen in der gleichen Ansicht wie Figur 1;

Fig. 4 eine perspektivische Darstellung des in Figur 1 dargestellten Umlenkbeschlages jedoch in montiertem Zustand;

Fig. 5 desgleichen gemäß der Schnittlinie V-V gesehen;

Fig. 6 einen vierten Umlenkbeschlag in der Vorderansicht, jedoch ohne Gurtumlenkeinrichtung;

Fig. 7 desgleichen im Schnitt der Linie VII-VII der Fig. 6 mit Gurtumlenkeinrichtung;

Fig. 8 Einzelheiten in Richtung der Linie VIII-VIII der Fig. 7 gesehen;

Fig. 9 einen fünften Umlenkbeschlag in parallel perspektivischer Darstellung;

Fig.10 desgleichen in Explosionsdarstellung;

Fig.11 desgleichen im Längsschnitt;

Fig. 12 einen sechsten Umlenkbeschlag in der Vorderansicht, jedoch ohne Gurtumlenkeinrichtung;

Fig. 13 desgleichen mit Gurt-Umlenkeinrichtung im Schnitt der Linie XIII-XIII der Fig. 12 gesehen;

Fig. 14 desgleichen im Querschnitt gemäß der Linie XIV-XIV der Fig. 12,

Fig. 15 eine perspektivische Darstellung eines weiteren Umlenkbeschlages;

Fig. 16 eine Variante einer Einzelheit des in Figur 15 dargestellten Umlenkbeschlages;

Fig. 17 eine Weiterentwicklung des Umlenkbeschlages gemäß der Figur 15 in perspektivischer Darstellung.

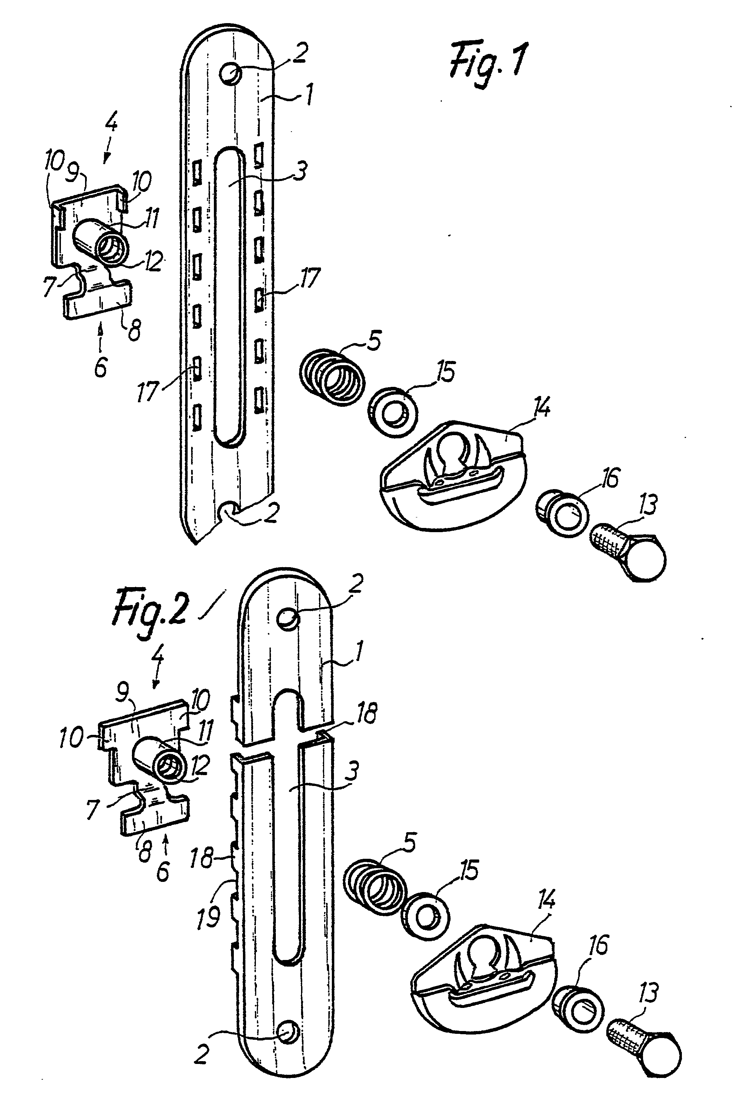

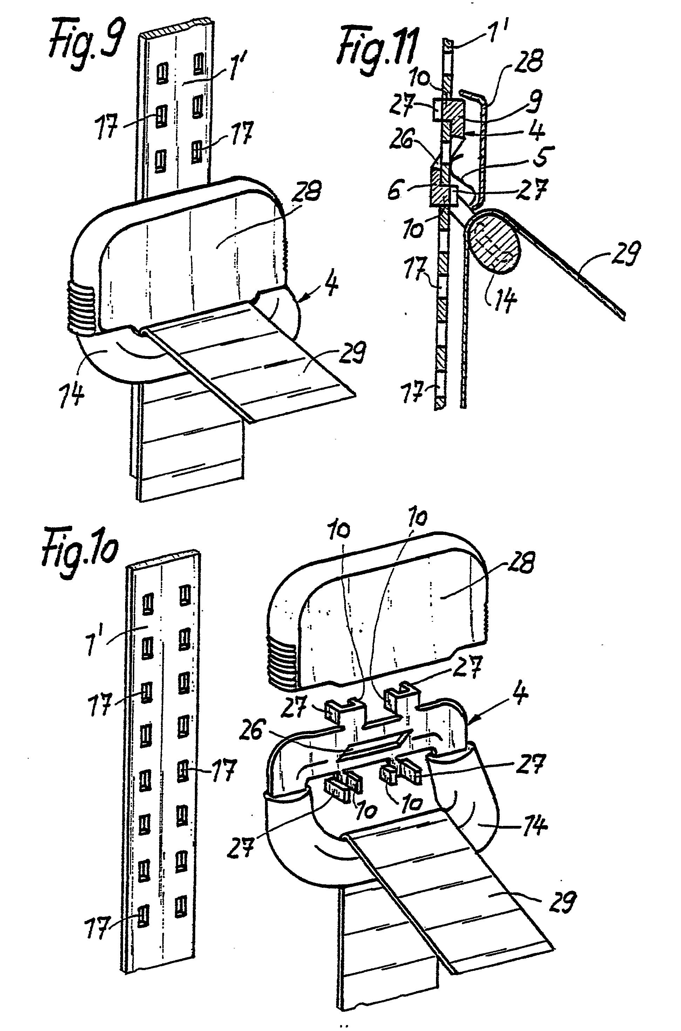

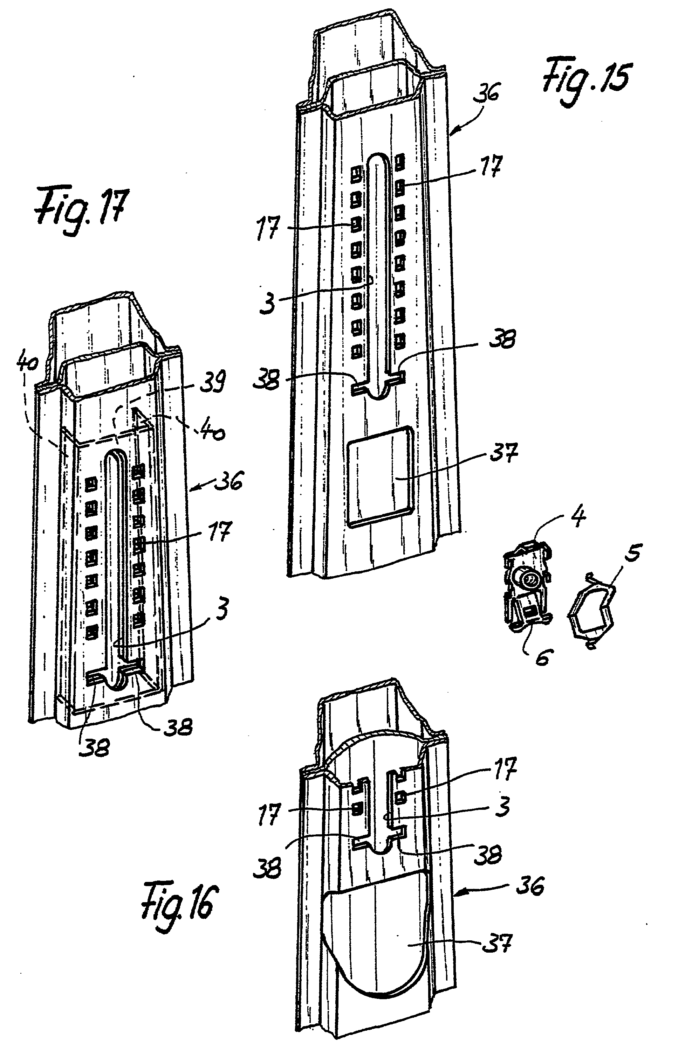

Allen Umlenkbeschlägen gemäß der Figuren 1 bis 8 und 12 bis 14 ist jeweils eine gerade Schiene 1 mit in ihren Endteilen angeordneten Befestigungslöchern 2 und mit einem längs der Schiene verlaufenden Langloch 3, welches mit Abstand von den Befestigungslöchern 2 endet, ein längs der Schiene 1 begrenzt verstellbar gehalterter Schlitten 4 und ein Federelement 5 gemeinsam.

Der Umlenkbeschlag gemäß der Fig. 9 bis 11, welcher später noch erläutert wird, hat eine Schiene 1 ohne Langloch 3.

Der Schlitten 4 besteht aus einem Blechzuschnitt, dessen Dicke kleiner als die Breite des Langloches 3 ist. Der im wesentlichen ebene rückseitig der Schiene 1 angelegte Schlitten 4 hat einen ersten, angeschnittenen, hammerkopfförmigen, gekröpften Endteil 6, der das Langloch 3 mit geringem Bewegungsspiel durchgreift und mit seinem erweiterten Kopf 8 an der Frontseite der Schiene 1 anliegt.

Am anderen, zweiten Endteil 9 des Schlittens 4 sind jeweils zwei Rastnasen 10 mit Abstand nebeneinander angeordnet.

Zwischen beiden Endteilen 6 und 9 des Schlittens 4 ist an letzterem ein zweiter Führungsteil 11 in Form einer zylindrischen Hülse angeordnet, die vom Schlitten 4 rechtwinklig gerichtet abstrebt und das Langloch 3 längs verstellbar durchgreift.

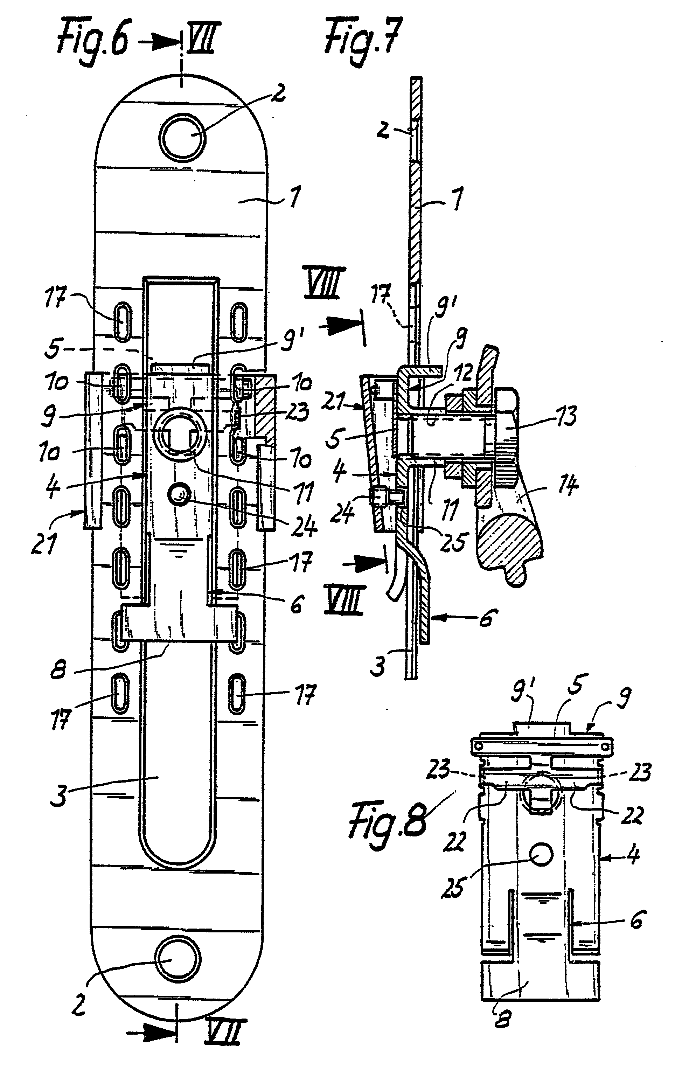

Die axiale Bohrung der Hülse ist als Gewindebohrung 12 ausgebildet. In letztere ist, wie u.a. aus der Figur 5 ersichtlich, eine Befestigungsschraube 13 eingeschraubt, mittels welcher eine Gurtumlenkeinrichtung 14 am Schlitten 4 gehaltert ist.

Gemäß der Figur 1 bis 5 ist auf den frontseitig aus dem Langloch 3 herausragenden Abschnitt des zweiten Führungsteiles 11 das als Schraubendruckfeder ausgebildete Federelement 5 aufgesteckt, welches sich unter Federvorspannung einerseits an der Frontseite der Schiene 1 und andererseits an einer am freien Ende des Führungsteiles 11 ange ordneten Schulter 15 abstützt.

Als Schulter ist eine gelochte und von der Befestigungsschraube 13 durchgriffene Scheibe vorgesehen.

Zwischen der Schulter 15 und dem Kopf der Befestigungsschraube 13 ist noch eine Distanzhülse 16 angeordnet, deren axiale Länge größer als die Dicke des von der Befestigungsschraube 13 durchgriffenen Teiles der Gurtumlenkeinrichtung 14 ist, so daß mittels der Befestigungsschraube 13 die Distanzhülse 16 und die als Scheibe ausgebildete Schulter 15 reibschlüssig an die freie Stirnseite des zweiten Führungsteiles 11 angespannt werden kann, ohne die drehbewegliche Halterung der Gurtumlenkeinrichtung 14 auszuschließen.

Gemäß der Figuren 1, 4 und 5 sind in der Schiene 1 beiderseits des Langloches 13 je eine Reihe den Rasten 10 angepaßte Löcher bildende Rasten 17 angeordnet, in welche die Rastnasen 10 vom Federelement 5 beeinflußt zwangsläufig eingreifen, wenn die Rastnasen beim Verschieben des Schlittens 4 zwei dieser Rasten 17 passieren.

Zum beabsichtigten Lösen einer derartigen Rastverbindung ist lediglich auf dei Gurtumlenkeinrichtung 14 ein in axialer Richtung der Befestigungsschraube 13 zielender Druck auszuüben, wobei der obere, zweite Endteil 9 des Schlittens 4 um den Kopf 8 des ersten Endteiles 6 verschwenkt und von der Rückseite der Schiene 1 abgehoben wird und dabei die Rastnasen 10 aus den Rasten 17 herausgehoben werden.

Gemäß Figur 2 sind anstelle von Rastlöchern 17 beide Längsrandteile 18 der Schiene 1 zum Schlitten 4 hin rechtwinklig abgebogen, in welchen den Rastnasen 10 in Form, Lage und Abmessungen angepaßte Rasten 19 angeformt sind.

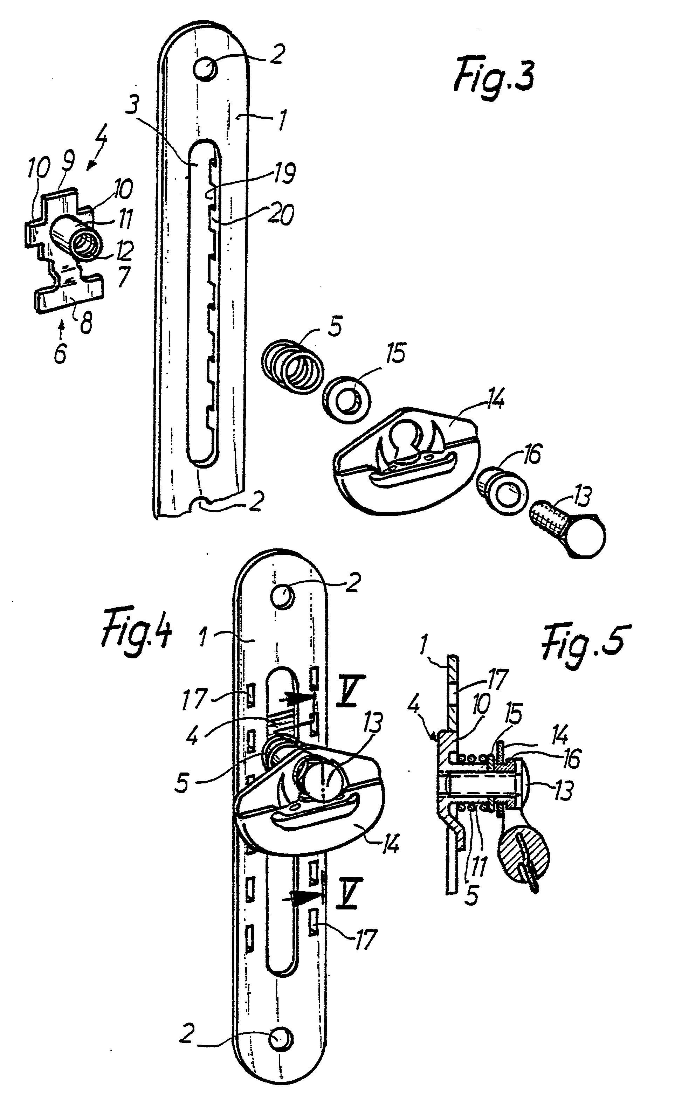

Bei dem in Figur 3 gezeigten Ausführungsbeispiel sind beide Längsrandteile 20 des Langloches 3 zum Schlitten 4 hin rechtwinklig abgebogen und mit einer Vielzahl angeschnittener, mit Abstand hintereinander und über die gesamte Länge der Längsrandteile 20 verteilt angeordneter Rasten 19 versehen.

Die Rasten 17 und die Rasten 20 haben zueinander parallel und zur Längserstreckung der Schiene rechtwinklig gerichtete Flanken und die Flanken der Rastnasen 10 sind diesen entsprechend ausgebildet.

Der in den Figur 6 bis 8 dargestellte Umlenkbeschlag entspricht im wesentlichen dem der Figur 1. Demzufolge sind mindestens annähernd einander gleichende Teile mit den Bezugszeichen des in Figur 1 gezeigten Umlenkbeschlages versehen.

Jedoch umfaßt der in den Fig. 6 bis 8 gezeigte Umlenkbeschlag einige Veränderungen. So endet das obere Endteil 9 des Schlittens 4 in einer im Langloch 3 längs verstellbar geführten Abwinklung 9'.

Ferner ist das Federelement 5 als Blattfeder ausgebildet, erstreckt sich in Längsrichtung rechtwinklig zur Verstellrichtung des Schlittens 4 und stützt sich lediglich mit dem mittleren Bereich an der Rückseite des Schlittens 4 ab.

Die freien Endteile der Blattfeder sind von der Schlittenrückseite weggebogen und stützen sich unter Federvorspannung an einem mit dem Schlitten 4 synchron verstellbaren Widerlager 21 ab. An der Blattfeder ist ein zu dieser parallel angeordneter Steg 22 angeschnitten, dessen abgewinkelten Endteile 23 je einen Längsrandteil des Schlittens 4 klammerartig umfassen. Das Widerlager 21 aus Kunststoff hat ein U-förmiges Profil mit in den Innenseiten der Schenkel angeformten längs verlaufenden Nuten, in die die Längsrandteile der Schiene 1 längs verstellbar eingreifen.

Im Steg des Widerlagers 21 ist ein als Madenschraube ausgebildeter Bolzen 24 gelagert, der in eine Bohrung 25 im Schlitten 4 eingreift, so daß beim Verstellen des Schlittens 4 das Widerlager 21 synchron mitgenommen wird.

Zum beabsichtigten Lösen einer derartigen Rastverbindung zwischen der Schiene 1 und dem Schlitten 4 ist lediglich auf die Gurtumlenkeinrichtung 14 ein in axialer Richtung der Befestigungsschraube 13 zielender und die Federkraft des Federelementes 5 überwindender Druck auszuüben, wobei der obere, zweite Endteil 9 des Schlittens 4 um den Kopf 8 des ersten Endteiles 6 verschwenkt und von der Rückseite der Schiene 1 abgehoben wird und dabei die Rastnasen 10 aus den Rasten 17 herausgehoben werden.

Bei dem in den Figuren 9 bis 11 gezeigten Umlenkbeschlag ist der obere Endteil 9 des Schlittens 4 zur Frontseite hin verkröpft und im Bereich der Abkröpfung ist eine Schiene-Durchsteckóffnung 26 vorgesehen, durch welche die Schiene 1′ so hindurchgesteckt ist, daß der untere Endteil 6 des Schlittens 4 in der Sperrstellung an der Rückseite der Rastschiene 1′ anliegt, während der obere Endteil 9 sich an der Schienen-Frontseite abstützt.

An beiden Endteilen 6 und 9 sind zur Schiene 1′ hinzielende Rastnasen 10 angeformt, die jeweils in eine Raste 17 der lediglich mit zwei längs verlaufenden Reihen Rastlöchern versehenen Rastschiene 1′ eingreifen.

Ferner sind an beiden Endteilen 6 und 9 des Schlittens 4 an den Längsseiten der Rastschiene 1′ längs verschieblich angreifende Geradführungselemente 27 angeformt.

Am Schlitten 4 ist noch ein die Schiene 1′ mit Spiel umfassender und die Gurtumlenkeinrichtung 14 bildender Bügel angeformt.

Auf den Schlitten 4 ist eine Abdeckkappe 28 aus Kunststoff aufgerastet, an der das an der Schiene 1′ sich abstützende Federelement 5 so gehaltert ist, daß der Schlitten 4 vom Federelement 5 ständig in die Sperrstellung gedrückt wird.

Durch die Gurtumlenkeinrichtung 14 ist ein Sicherheitsgurt 29 hindurchgeführt.

Zum Lösen der dargestellten Schlitten-Sperrstellung ist der Schlitten 4 so um eine horizontale Achse zu kippen, daß alle Rastnasen 10 aus den Rasten 17 herausgehoben werden, wonach der Schlitten 4 längs der Schiene 1′ mühelos verstellt werden kann.

Die Schiene 1′ des Schlittens 4 und das Federelement 5 bestehen aus Stahl.

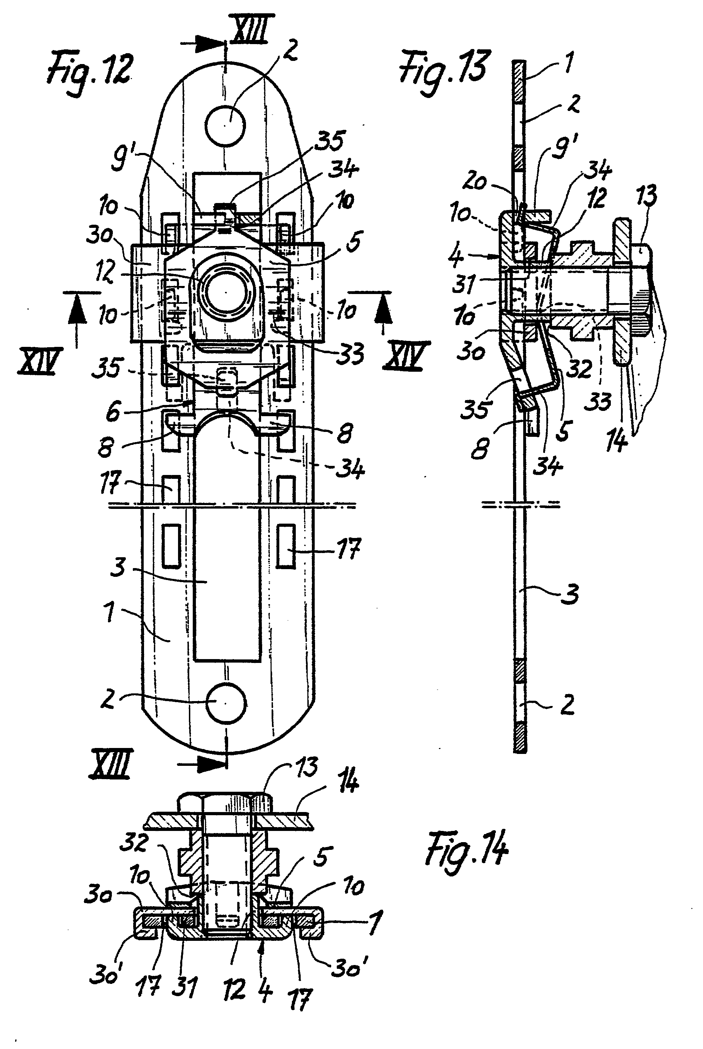

Auch der in den Fig. 12 bis 14 gezeigte, bevorzugte Umlenkbeschlag gleicht im wesentlichen dem Umlenkbeschlag gemäß der Figur 1 bzw. gemäß der Figur 6 bis 8 und auch hier sind für einander gleichende Teile gleiche Bezugszeichen gewählt worden.

Allerdings weist auch dieser Umlenkbeschlag (Fig. 12-14) einige Veränderungen auf, die auch nach einer überhöhten Belastung des Umlenkbeschlages und einer daraus sich ergebenden Durchbiegung und Verwindung der Schiene 1 sicher stellen, daß dennoch die Rastnasen 10 im Eingriff bleiben.

Hierzu sind unter anderem am Schlitten 4 zwei Paar Rastnasen 10 angformt. Ferner ist eine Spange 30 vorgesehen, die mit ihrer Rückseite an die Frontseite der Schiene 1 angelegt ist. Die Spange 30 hat angeformte, die Längsrandteile der Schiene 1 längs verschiebar umfassende Endteile 30′. Etwa mittig der formfesten Spange 30 ist ein zylindrischer Durchbruch 31 vorgesehen, durch welchen die Hülse 12 axial verstellbar hindurchgreift.

Die Befestigungsschraube 13 besitzt eine durch eine Distanzscheibe gebildete, radial vorstehende Schulter 32, deren Durchmesser größer als der des Durchbruches 31 ist. Ferner ragt die Hülse 12 in der Sperrlage des Umlenkbeschlages über die Frontseite der Spange 30 hinaus, so daß der Schlitten 4 so weit nach hinten gekippt werden kann, bis die Schulter 32 am Rand des Durchbruches 31 anliegt. Dieser Kippweg ist so groß bemessen, daß zum beabsichtigten Verstellen des Schlittens 4 relativ zur Schiene 1 die Rastnasen 10 des Schlittens 4 aus den Rasten 17 der Schiene 1 herausgeführt werden können.

Das Federelement 5 ist als längliche Blattfeder ausgebildet und in Richtung ihrer Längserstreckung zur Verstellrichtung des Schlittens 4 gleichgerichtet angeordnet. Etwa mittig der Biegefeder ist ein Durchbruch angeordnet, durch welchen die Hülse 12 samt Befestigungsschraube 13 hindurchgreift. Die Blattfeder ist etwa mittig ihrer Längserstreckung zur Stange 30 hin stumpfwinklig durchgebogen, stützt sich mit der Biegekante 33 an der Frontseite der Spange 30 ab und von beiden Federschenkeln der Blattfeder sind Haken 34 abgebogen, die unter Vorspannung der Blattfeder in diesen angepaßte Durchbrüche 35 des Schlittens 4 eingehakt sind.

Bei dem in den Figuren 15 bis 17 dargestellten Ausführungsbeispiel ist die Schiene 1 samt Langloch 3 und Rasten 17 durch Teile eines Hohlträgers 36 der Fahrzeugkarosserie gebildet.

Ferner ist unterhalb des Langloches 3 und mit Abstand von diesem eine Schlitten-Durchstecköffnung 37 angeordnet, um den Schlitten 4 in den Hohlträger 36 einführen zu können.

Zur Erleichterung der lagerichtigen Anordnung des Schlittens 4 relativ zum im Hohlträger 36 angeformten Langloch 3 samt Rasten 17 münden in das Langloch 3 zwei Schlitze 38 ein, die gemeinsam mit dem Langloch 3 eine Durchstecköffnung für den unteren Endteil 6 des Schlittens 4 bilden.

Gemäß Figur 16 reicht die Schlitten-Durchstecköffnung 37 bis in die seitlichen Wände des Hohlträgers 36 hinein, um das Einführen des Schlittens in den Hohlträger 36 weiterhin zu erleichtern.

Um bei einem relativ dünnwandigen Hohlträger 36 dennoch eine hohe Formfestigkeit zu erhalten, ist gemäß Figur 17 rückseitig der das Langloch 3 und die Rasten 17 aufweisenden Wand des Hohlträgers 36 eine spiellos anliegende Verstärkungsplatte 39 befestigt, insbesondere angeschweißt, die zum Langloch 3 samt Rasten 17 und Schlitzen 38 konform ausgebildete und deckungsgleich angeordnete Durchbrüche aufweist.

Zur weiteren Erhöhung der Formfestigkeit hat die Verstärkungsplatte 39 nach innen abgewinkelte Längsrandteile 40, die auch zur Anordnung von Rasten 19 gemäß der Figuren 2 und 3 genutzt werden können.

## Patentansprüche

1. Höhenverstellbarer Umlenkbeschlag für Sicherheitsgurte zur Anordnung in Kraftfahrzeugen, bestehend aus einer etwa vertikal sich erstreckend anzuordnenden Schiene (1) mit einer Mehrzahl in Richtung ihrer Längserstreckung mit Abstand hintereinander angeordneten Rasten (17) sowie aus einem an der Schiene längs dieser verstellbar gehalterten, in die Rasten der Schiene lösbar eingreifbare Rastnasen (10) aufweisenden und gegen Federkraft aus den Rasten manuell aushebbaren Schlitten (4), letzterer zudem eine zu seiner Verschieberichtung quer gerichtete Gewindebohrung (12) aufweist, in die eine die Gurtumlenkeinrichtung (14) halternde Befestigungsschraube (13) eingeschraubt ist, wobei die Schiene (1) ein längs dieser sich erstreckendes Langloch (3) aufweist und der Schlitten (4) an die Rückseite der Schiene (1) angelegt ist, dadurch gekennzeichnet, daß der Schlitten einen durch das Langloch (3) hindurchgesteckten, im Langloch (3) längs verstellbar geführten und mit seinem freien Ende an der Frontseite der Schiene (1) sich abstützenden, ersten Endteil (6) aufweist, der andere zweite Endteil (9) des Schlittens (4) gegen Federkraft um eine zur Schienen-Längs erstreckung quer verlaufende Achse von der Schiene (1) begrenzt abkippbar gehaltert ist und mit der Schiene (1) zusammenwirkende Rastnasen (10) aufweist, zudem am Schlitten (4) zwischen den beiden Endteilen (6+9) ein das Schienen-Langloch (3) durchgreifender und die zum Anschluß der Gurtumlenkeinrichtung (14) bestimmte Gewindebohrung (12) aufweisender, zweiter Führungsteil (11) vorgesehen ist und daß die Rasten der Schiene (1) über den gesamten Verschiebeweg des Schlittens (4) verteilt angeordnet sind.

2. Umlenkbeschlag nach Anspruch 1, dadurch gekennzeichnet, daß der erste Endteil (6) des Schlittens (4) dem unteren Ende der Schiene (1) zugewandt angeordnet ist.

3. Umlenkbeschlag nach Anspruch 1 oder 2, dadurch gekennzeichnet, daß der Schlitten (4) aus einem im wesentlichen ebenen Blechzuschnitt besteht, dessen Dicke kleiner als die Breite des Schienen-Langloches (3) ist, ferner der erste Endteil (6) durch einen angeschnittenen hammerkopfförmigen verkröpften Vorsprung gebildet ist, der das Langloch (3) durchsetzt und mit seinem erweiternden Kopf an der Außenseite der Schiene (1) anliegt, und daß am anderen zweiten Endteil (9) des Blechzuschnittes mindestens eine Rastnase (10) angeordnet, insbesondere angeformt ist.

4. Umlenkbeschlag nach einem der Ansprüche 1 bis 3, dadurch gekennzeichnet, daß der zweite Führungsteil (11) des Schlittens (4) als von diesem quer abstrebende, insbesondere zylindrische Hülse ausgebildet ist, deren axial verlaufende Bohrung als Gewindebohrung (12) ausgebildet ist.

5. Umlenkbeschlag nach Anspruch 4, gekennzeichnet durch eine am Schlitten (4) angeformte Hülse.

6. Umlenkbeschlag nach einem der Ansprüche 1 bis 5, dadurch gekennzeichnet, daß in der Schiene (1) beiderseits des Langloches (3) je eine längs der Schiene (1) verlaufende Reihe Rasten (17) angeordnet sind und daß am zweiten Endteil (9) des Schlittens (4) zwei mit Abstand nebeneinander angeordnete, zur Schiene (1) hin abstrebende, nach Lage, Form und Abmessungen den Rasten (17) angepaßte Rastnasen (10) angeformt sind.

7. Umlenkbeschlag nach einem der Ansprüche 1 bis 5, dadurch gekennzeichnet, daß an der Schiene (1) beiderseits des Langloches (3) zum Schlitten (4) hin abgewinkelte Längsrandteile (18 bzw. 20) vorgesehen sind, in welchen eine Mehrzahl mit Abstand hintereinander und über die Länge der Längsrandteile verteilt angeordnete, angeschnittene Rasten (19) vorgesehen sind und daß am Schlitten (4) zwei seitliche, abstrebende, einander entgegengerichtet, den Rasten (19) angepaßte Rastnasen (10) angeformt, insbesondere angeschnitten sind.

8. Umlenkbeschlag nach Anspruch 7, dadurch gekennzeichnet, daß die Längsrandteile (18) der Schiene (1) zu Rastschienen umgeformt sind.

9. Umlenkbeschlag nach Anspruch 7, dadurch gekennzeichnet, daß die beiden längs verlaufenden Randteile (20) des Langloches (3) zum Schlitten (4) hin rechtwinklig abgebogen und mit angeschnittenen Rasten (19) versehen sind.

10. Umlenkbeschlag nach einem der Ansprüche 1 bis 9, dadurch gekennzeichnet, daß auf den frontseitig, aus dem Langloch (3) der Schiene (1) herausragenden Abschnitt des zweiten Führungsteiles (11) ein als Schraubendruckfeder ausgebildetes Federelement aufgesteckt ist, die sich unter Vorspannung einerseits an der Frontseite der Schiene (1) und andererseits an einer am freien Ende des zweiten Führungsteiles (11) angeordneten, seitlich vorstehenden Schulter (15) abstützt.

11. Umlenkbeschlag nach Anspruch 10, dadurch gekennzeichnet, daß die Schulter (15) durch eine gegenüber dem Querschnitt des zweiten Führungsteiles (11) größere, mittig gelochte Scheibe gebildet ist, die am zweiten Führungsteil (11) mittels der zur Befestigung der Gurtumlenkeinrichtung (14) bestimmten und in die Gewindebohrung (12) des zweiten Führungsteiles (11) eingeschraubten Schraube (13) festgelegt ist.

12. Umlenkbeschlag nach einem der Ansprüche 1 bis 9, dadurch gekennzeichnet, daß das Federelement (5) rückseitig des Schlittens (4) gehaltert ist und sich unter Federvorspannung an einem an der Schiene (7) und mit dem Schlitten (4) synchron längs verstellbar gehalterten Widerlager (21) abstützt.

13. Umlenkbeschlag nach Anspruch 12, dadurch gekennzeichnet, daß als Federelement (5) eine Blattfeder angeordnet ist, die angeformte und am Schlitten (4) angreifende Klammern aufweist.

14. Umlenkbeschlag nach Anspruch 13, dadurch gekennzeichnet, daß das als Blattfeder ausgebildete Federelement (5) in Richtung seiner Längserstreckung zur Verstellrichtung des Schlittens (4) quer gerichtet ist, der mittlere Teil sich am Schlitten (4) abstützt, während die Blattfeder-Endteile zum Widerlager (21) hin abgebogen sind und sich unter Federvorspannung am Widerlager (21) abstützen, zudem am mittleren Teil des als Blattfeder ein zu letztere parallel angeordneter Steg (22) angeschnitten ist, dessen Endtile (23) zueinander gleich gerichtet abgebogen sind und die Längsrandteile des Schlittens (4) zumindest reibschlüssig gesichert umfassen.

15. Umlenkbeschlag nach einem der Anspüche 12 bis 14, dadurch gekennzeichnet, daß das Widerlager (21), insbesondere aus Kunststoff, U-förmig profiliert ist, und daß in den einander zugewandten Seiten der Widerlager-Schenkel je eine längs verlaufende Nut angeordnet, insbesondere angeformt ist, in welche die Längsrandteile der Schiene (1) längs verstellbar eingreifen.

16. Umlenkbeschlag nach Anspruch 15, dadurch gekennzeichnet, daß ein im Widerlager (21), insbesondere in dessen Steg gehalterter, zum Schlitten (4) hinzielender und in eine Bohrung (25) des Schlittens (4) eingreifender Bolzen (24) vorgesehen ist.

17. Umlenkbeschlag nach einem der Ansprüche 1 bis 16, dadurch gekennzeichnet, daß der zweite Endteil (9) des Schlittens (4) in einer im Langloch (3) der Schiene (1) längs verstellbar geführten Abwinklung (9') endet.

18. Höheneinstellbarer Umlenkbeschlag für Sicherheitsgurte zur Anordnung in Kraftfahrzeugen, bestehend aus einer Rasten (17) aufweisenden Schiene (1') und einem länglichen, an letzterer längs dieser verstellbar gehalterten und mittels Federkraft in die Rasten der Schiene lösbar eingreifenden und eine Gurtumlenkeinrichtung (14) tragenden Schlitten (4), dadurch gekennzeichnet, daß der eine Endteil (9) des Schlittens (4) um die Dicke der Schiene (1') verkröpft ist, der Schlitten (4) im Bereich der Abkröpfung eine Schienen-Durchsteköffnung (26) aufweist, durch welche die Schiene (1') so durchgesteckt ist, daß der eine abgekröpfte Endteil (9) des Schlittens (4) an der Frontseite der Schiene (1) anliegt, während der andere Schlittenendteil (6) sich an der Rückseite der Schiene (1') abstützt, zumindest an einem Schlitten-Endteil (6 bzw. 9) in Rastlöcher (17) der Schiene (1) eingreifende Rastnasen (10) angeordnet sind und die Gurtumlenkeinrichtung (14) am zweiten Schlittenendteil (6) angreifend angeordnet ist.

19. Umlenkbeschlag nach Anspruch 18, dadurch gekennzeichnet, daß der erste Schlittenendteil (9) in der Gebrauchslage nach oben zielend angeordnet ist.

20. Umlenkbeschlag nach Anspruch 18 oder 19, dadurch gekennzeichnet, daß an beiden Endteilen (6,9) des Schlittens (4) jeweils zur Schiene (1') hin gerichtete Rastnasen (10) angeordnet, insbesondere angeformt sind, und daß in der Sperrlage des Schlittens (4) alle Rastnasen (10) jeweils in eine Raste (17) der Schiene (1) eingreifen.

21. Umlenkbeschlag nach einem der Ansprüche 18 bis 20, dadurch gekennzeichnet, daß insbesondere an beiden Endteilen (6 und 9) des Schlittens (4) an den schmalen Längsseiten der Schiene (1') längs verschieblich angreifende Geradführungselemente (27) angeordnet, insbesondere angeformt sind.

22. Umlenkbeschlag nach einem der Ansprüche 18 bis 21, dadurch gekennzeichnet, daß am Schlitten (4), insbesondere an dessen unteren Endteil (6) ein um die Frontseite der Schiene (1') herumgeführter, die Gurtumlenkeinrichtung (14) bildender Bügel angeordnet, insbesondere angeformt ist.

23. Umlenkbeschlag nach einem der Ansprüche 1 bis 17, dadurch gekennzeichnet, daß am Schlitten (4) eine frontseitig der Schiene (1) angelegte und längs der Schiene (1) verstellbar geführte formstabile Spange (30) gehaltert ist, welche beide Längsränder der Schiene (1) umfassende Endteile aufweist und daß der Schlitten (4) mit seiner Frontseite der Rückseite der Spange (30) gegenüber angeordnet ist.

24. Umlenkbeschlag nach Anspruch 23, dadurch gekennzeichnet, daß die Spange (30) und deren die Längsrandteile der Schiene (1) umfassenden Endteile etwa den Bereich zweier benachbarter Rasten der Schiene (1) entsprechende Länge aufweisen und daß insbesondere zudem die die Längsrandteile der Schiene (1) umfassenden Endteile der Spange (30) mindestens annähernd niveaugleich zu den Rastnasen (10) des Schlittens (4) angeordnet sind.

25. Umlenkbeschlag nach Anspruch 23 oder 24, dadurch gekennzeichnet, daß die Spange (30) am Schlitten (4) mittels der Befestigungsschraube (13) der Gurtumlenkeinrichtung (14) gehaltert ist, insbesondere derart, daß die Befestigungsschraube (13) einen dieser angepaßten Durchbruch (31) der Spange (30) durchgreift und daß an der Befestigungsschraube (13) eine mit dem Durchbruchsrandteil der Spange (30) zusammenwirkende und den Kippweg des Schlittens (4) begrenzende Schulter (32) angeordnet ist.

26. Umlenkbeschlag nach einem der Ansprüche 23 bis 25, dadurch gekennzeichnet, daß der Schlitten (4) zwei Paar in Längserstreckung der Schiene (1) mit Abstand hintereinander angeordnete Rastnasen (10) aufweisen.

27. Umlenkbeschlag nach einem der Ansprüche 23 bis 26, dadurch gekennzeichnet, daß zwischen der Frontseite der Spange (30) und der Gurtumlenkeinrichtung (14) ein als Blattfeder ausgebildetes und mit Vorspannung angeordnetes Federelement (5) angeordnet ist, das zum Langloch (3) der Schiene (1) hin umgebogene, das Langloch (3) durchgreifende und am Schlitten (4) angreifende Endteile aufweist.

28. Umlenkbeschlag nach Anspruch 27, dadurch gekennzeichnet, daß das als Blattfeder (5) ausgebildete Federelement etwa mittig seiner Längserstreckung einen Durchbruch aufweist, durch welchen die Befestigungsschraube (13) der Gurtumlenkeinrichtung (14) hindurchgreift.

29. Umlenkbeschlag nach Anspruch 27 oder 28, dadurch gekennzeichnet, daß das als Blattfeder ausgebildete Federelement (5) etwa mittig seiner Längserstreckung stumpfwinklig abgebogen ist und sich mit der Biegekante (33) an der Frontseite der Spange (30) abstützt, ferner beide Federschenkel der Blattfeder jeweils über die Spange (30) hinausreichen und in abgebogenen, das Langloch (3) der Schiene (1) durchgreifenden Haken (34) enden, die in Durchbrüche (35) des Schlittens (4) eingehakt sind.

30. Umlenkbeschlag nach einem der vorherigen Ansprüche, dadurch gekennzeichnet, daß die Schiene (1) samt Langloch (3) und Rasten (17) durch Teile eines Fahrzeughohlträgers (36) gebildet sind und daß im Fahrzeughohlträger (36) nahe des Langloches eine Schlitten-Montageöffnung (37) angeordnet ist.

31. Umlenkbeschlag nach Anspruch 30, dadurch gekennzeichnet, daß die Schiene (1), das Langloch (3) und die Rasten (17) sowie die Schlitten-Montageöffnung (37) an der im wesentlichen ebenen Seite des Fahrzeughohlträgers (36) angeformt sind, die zur benachbarten Fahrzeugseite parallel verläuft und dem Fahrzeuginnenraum zugewandt ist.

32. Umlenkbeschlag nach Anspruch 30 oder 31, dadurch gekennzeichnet, daß die Schlitten-Montageöffnung (37) unterhalb des Langloches (3) und der Rasten (17,19) und mit Abstand von letzteren angeordnet ist.

33. Umlenkbeschlag nach Anspruch 32, dadurch gekennzeichnet, daß die Schlitten-Montageöffnung (37) bis in die Seiten des Fahrzeughohlträgers (36) hineinreichend ausgebildet ist, die sich an die Seite anschließen, in welcher das Langloch (3) und die Rasten (17) angeordnet sind.

34. Umlenkbeschlag nach einem der Ansprüche 30 bis 33, dadurch gekennzeichnet, daß in das Langloch (3) nahe des Endteiles, welches der Schlitten-Montageöffnung (37) zugewandt ist, zwei zueinander niveaugleich angeordnete, einander entgegengerichtete, zum Langloch (3) rechtwinklig erstreckende und symmetrisch ausgebildete Schlitze (38) einmünden, die mit dem Langloch (3) gemeinsam eine dem Profil des hammerkopfförmigen Endteiles (6) des Schlittens (4) entsprechende Durchstecköffnung für den Endteil (6) bilden.

35. Umlenkbeschlag nach einem der Ansprüche 30 bis 34, dadurch gekennzeichnet, daß im Fahrzeug-Hohlträger (36) eine an die Rückseite der das Langloch (3) und die Rasten (17) aufweisenden Fahrzeughohlträgerwand spiellos angelegte Verstärkungsplatte (39) befestigt ist, welche dem Langloch (3) und den Rasten (17) entsprechende und zu letzteren deckungsgleich angeordnete Durchbrüche aufweist.

36. Umlenkbeschlag nach Anspruch 35, dadurch gekennzeichnet, daß die Verstärkungsplatte (39) nach innen abgewinkelte Längsrandteile (40) aufweist.

**Claims**

1. A vertically adjustable shoulder anchor for safety belts for installation in motor vehicles consisting of a plate (1), arranged so that it extends substantially vertically, comprising a plurality of locating notches (17) arranged spaced behind one another in their longitudinal direction, and of a carrier part (4) which is fastened so that it can be adjusted longitudinally on the plate and which comprises locating lugs (10) which can be releasably engaged in the locating notches in the plate, which carrier part can be lifted out of the locating notches manually against the action of a spring and, in addition, the carrier part comprises a threaded hole (12), which is directed perpendicularly to the direction in which it is adjusted, into which a fastening screw (13) which attaches the device for changing the direction of the belt (14) is screwed, and wherein the plate (1) comprises an elongated hole (3) extending longitudinally and the carrier part (4) is located at the rear side of the plate (1), characterized in that the carrier part comprises a first end part (6) which is inserted through the elongated hole (3) and is adjustably movable longitudinally in the elongated hole (3) and bears with its free end on the front side of the plate (1), in that the other, second end part (9) of the carrier part (4) is held, against the action of a spring, on an axis of the plate which extends at right angles to the longitudinal direction of the plate so that it can tilt to a limited extent, and it comprises locating lugs (10) which cooperate with the plate (1), and, in addition, a second guiding part (11), which comprises the threaded hole (12) adapted to attach the device for changing the direction of the belt (14), is provided on the carrier part (4) between the two end parts (6 & 9) and engages through the elongated hole (3) in the plate, and in that the locating notches in the plate (1) are distributed over the entire length over which the carrier part (4) can be moved.

2. A shoulder anchor according to Claim 1, characterized in that the first end part (6) of the carrier part (4) is arranged so that it is turned towards the lower end of the plate (1).

3. A shoulder anchor according to Claim 1 or 2, characterized in that the carrier part (4) consists of a substantially flat sheet metal section the thickness of which is less than the width of the elongated hole (3) in the plate, and furthermore the first end part (6) is formed as a hammerhead-shaped offset projection which is cut on it and which passes through the elongated hole (3) and bears by means of its widened head on the outerside of the plate (1), and in that there is at least one locating lug (10) situated on, and preferably formed on, the other, second end part (9) of the sheet metal section.

4. A shoulder anchor according to any one of Claims 1 to 3, characterized in that the second guiding part (11) of the carrier part (4) is formed as a, preferably cylindrical, socket projecting from it perpendicularly, the axially extending bore of which is made as a threaded hole (12).

5. A shoulder anchor according to Claim 4, characterized by a socket formed on the carrier part (4).

6. A shoulder anchor according to any one of Claims 1 to 5, characterized in that a series of locating holes (17) are arranged in the plate (1) extending along the plate (1) on both sides of the elongated hole (3) and in that on the second end part (9) of the carrier part (4) two neighbouring but separated locating lugs (10) are formed projecting towards the plate (1) and adapted in position, shape and dimensions to the locating notches (17).

7. A shoulder anchor according to any one of Claims 1 to 5, characterized in that on either side of the elongated hole (3) there are longitudinal edge parts (18 or 20) on the plate (1) which are bent towards the carrier part (4) and in which are arranged a plurality of cut-out locating notches (19) distributed behind one another over the length of the longitudinal edge parts with gaps between them, and in that two oppositely directed, sideways projecting, locating lugs (10), adapted to the locating notches (19) are formed, preferably by cutting, on the carrier part (4).

8. A shoulder anchor according to Claim 7, characterized in that the longitudinal edge parts (18) of the plate (1) are converted into locating bars.

9. A shoulder anchor according to Claim 7, characterized in that the two longitudinally extending edges (20) of the elongated hole (3) are bent at right angles towards the carrier part (4) and are provided with cut out locating notches (19).

10. A shoulder anchor according to any one of Claims 1 to 9, characterized in that a spring element in the form of a compression spring is placed on the section of the second guiding part (11) which projects from the front side of the elongated hole (3) in the plate (1), which spring is supported under tension on the front side of the plate (1), on the one hand, and on a sideways projecting shoulder (15) located at the free end of the second guiding part (11), on the other hand.

11. A shoulder anchor according to Claim 10, characterized in that the shoulder (15) is formed by a disc, which is larger in cross-section than the second guiding part (11) and which has a central hole, which is fastened to the second guiding part (11) by means of the screw (13) which is adapted for the attachment of the device for changing the direction of the belt (14) and is screwed into the second guiding part (11).

12. A shoulder anchor according to any one of Claims 1 to 9, characterized in that the spring element (5) is held on the rear side of the carrier part (4) and bears, under spring tension, on an opposing support (21) which is fastened to be movable longitudinally on the plate (1) synchronously with the carrier part (4).

13. A shoulder anchor according to Claim 12, characterized in that a leaf spring which comprises preformed clamping regions which, engage in the carrier part (4) is provided as the spring element (5).

14. A shoulder anchor according to Claim 13, characterized in that the spring element (5) in the form of a leaf spring is arranged with its longitudinal extent directed perpendicularly to the direction of adjustment of the carrier part (4), the middle part of it bears on the carrier part (4) whereas the end parts of the leaf spring are bent in towards the opposing support (21) and bear, under spring tension, on the opposing support (21), and in that, in addition, on the middle part of the leaf spring a leg (22) is cut parallel to the latter, the end parts of which (23) are bent in the same direction as one another and enclose the longitudinal edge of the carrier part (4) so that it is at least held by friction.

15. A shoulder anchor according to any one of Claims 12 to 14, characterized in that the opposing support (21), preferably made of plastic, has a U-shaped profile and that in each of the facing sides of the opposing support legs there is a longitudinally extending groove, preferably formed in it, in which the longitudinal edges of the plate (1) engage so that they are longitudinally adjustable.

16. A shoulder anchor according to Claim 15, characterized in that a bolt (24) is provided which, directed towards the carrier part (4), engages in the opposing support (21), especially in its crosspiece, and in a hole (25) in the carrier part (4).

17. A shoulder anchor according to any one of Claims 1 to 16, characterized in that the second end part (9) of the carrier part (4) ends in a bent-over part (9') which can be adjustably moved longitudinally in the elongated hole (3) in the plate (1).

18. A vertically adjustable shoulder anchor for safety belts for installation in motor vehicles consisting of a plate (1') comprising locating notches (17) and of a carrier part (4) which carries a device for changing the direction of the belt (14) and which is fastened so that it can be adjusted longitudinally on the plate and which can be releasably engaged by means of the action of a spring in the locating notches in the plate, characterized in that one end part (9) of the carrier part (4) is offset by the thickness of the plate (1'), in the region where the bend is made the carrier part (4) comprises an opening (26) for the plate to pass through, through which the plate (1') is passed in such a way that the first, offset end part (9) of the carrier part (4) bears on the front side of the plate (1') whereas the other end part (6) of the carrier bears on the rear side of the plate (1'), and at least at one end of the carrier part (6 or 9) there are locating lugs (10) which engage in locating holes (17) in the plate (1'), and the device for changing the direction of the belt (14) is arranged so that it is engaged on the second end part (6) of the carrier part.

19. A shoulder anchor according to Claim 18, characterized in that the first end part of the carrier (9) is directed upwards when positioned for use.

20. A shoulder anchor according to Claim 18 or 19, characterized in that at both ends (6, 9) of the carrier part (4) there are locating lugs (10), preferably formed on the carrier, each directed towards the plate (1'), and in that in the locked position of the carrier part (4) all the locating lugs (10) engage in a respective locating hole (17) in the plate (1).

21. A shoulder anchor according to any one of Claims 18 to 20, characterized in that preferably at both ends (6, 9) of the carrier part (4) there are linear guiding elements (27), preferably formed with the carrier, which engage on the narrow longitudinal sides of the plate (1') so that they can move along them.

22. A shoulder anchor according to any one of Claims 18 to 21, characterized in that on the carrier part (4), preferably on its lower end part (6), and preferably formed with the carrier, there is a bow which forms the device for changing the direction of the belt (14) and which extends around the front side of the plate (1').

23. A shoulder anchor according to any one of Claims 1 to 17, characterized in that on the carrier part (4) there is a permanently shaped clamp (30) which rests on the front side of the plate (1) and can be adjustably moved along the plate (1), which clamp comprises end parts which enclose both longitudinal edges of the plate (1), and in that the carrier part (4) is arranged with its front side opposite the rear side of the clamp (30).

24. A shoulder anchor according to Claim 23, characterized in that the clamp (30) and its end parts which enclose the plate (1) have a length corresponding approximately to the distance between two adjacent locating notches in the plate (1) and that preferably, in addition, the end parts of the clamp (30) which enclose the longitudinal edge of the plate (1) are arranged at least approximately at the same level as the locating lugs (10) of the carrier part (4).

25. A shoulder anchor according to Claim 23 or 24, characterized in that the clamp (30) is held on the carrier part (4) by means of the screw (13) for attaching the device for changing the direction of the belt (14), preferably in such a way that the fastening screw (13) passes through a suitably sized opening (31) in the clamp (30) and in that a shoulder (32) is provided on the fastening screw (13) which cooperates with the edge of the opening in the clamp (30) and limits the extent of tilting of the carrier part (4).

26. A shoulder anchor according to any one of Claims 23 to 25, characterized in that the carrier part (4) comprises two pairs of locating lugs (10) arranged with a gap behind one another in the longitudinal direction of the plate (1).

27. A shoulder anchor according to any one of Claims 23 to 26, characterized in that located between the front side of the clamp (30) and the device for changing the direction of the belt (14) there is a pre-stressed spring element (5) in the form of a leaf spring which is bent in towards the elongated hole (3) in the plate (1) and comprises end parts which pass through the elongated hole (3) and engage on the carrier part (4).

28. A shoulder anchor according to Claim 27, characterized in that the spring element (5) in the form of a leaf spring comprises an opening at about the middle of its longitudinal extent through which the fastening screw (13) of the device for changing the direction of the belt (14) passes.

29. A shoulder anchor according to Claim 27 or 28, characterized in that the spring element (5) in the form of a leaf spring is bent at an obtuse angle approximately at the middle of its longitudinal extent and it bears by means of the edge (33) formed at the bend on the front side of the clamp (30), moreover both arms of the leaf spring each extend beyond the clamp (30) and are bent at the end into hooks (34) which pass through the elongated hole (3) in the plate (1) and are hooked in openings (35) in the carrier part (4).

30. A shoulder anchor according to any one of the previous Claims, characterized in that the plate (1) including the elongated hole (3) and locating notches (17) are formed by part of a hollow support in the vehicle (36) and in that an opening (37) for mounting the carrier part is provided in the hollow support in the vehicle (36) near the elongated hole (3).

31. A shoulder anchor according to Claim 30, characterized in that the plate (1), the elongated hole (3) and the locating notches (17) and also the opening (37) for mounting the carrier part are formed in the substantially flat side of the hollow support in the vehicle (36) which extends parallel to the adjacent side of the motor vehicle and is turned towards the space inside the motor vehicle.

32. A shoulder anchor according to Claim 30 or 31, characterized in that the opening (37) for mounting the carrier part is located below the elongated hole (3) and the locating notches (17, 19) and at a distance from the latter.

33. A shoulder anchor according to Claim 32, characterized in that the opening (37) for mounting the carrier part is formed extending into the sides of the hollow support in the vehicle (36) which are adjacent to the side in which the elongated hole (3) and the locating notches (17) are situated.

34. A shoulder anchor according to any one of Claims 30 to 33, characterized in that near the end part of the elongated hole (3) which is nearest the opening (37) for mounting the carrier part, two symmetrically formed slots (38), which are situated at the same level and extend in opposite directions to one another at right angles to the elongated hole (3), open out into the elongated hole (3) and form together with the latter an opening for the end part (6) of the carrier part (4) to pass through which corresponds with the profile of the hammerhead-shaped end part (6).

35. A shoulder anchor according to any one of Claims 30 to 34, characterized in that a reinforcing plate (39) which is placed without play against the rear side of the wall of the hollow support in the vehicle which comprises the elongated hole (3) and the locating notches (17) is fastened in the hollow support in the vehicle (36), and the reinforcing plate comprises openings which match the elongated hole (3) and the locating notches (17) and which are aligned to correspond with the latter.

36. A shoulder anchor according to Claim 35, characterized in that the reinforcing plate (39) comprises longitudinal edge parts (40) which are bent inwards.

**Revendications**

1. Ferrure de renvoi réglable en hauteur pour ceintures de sécurité à fixer dans des véhicules automobiles, constituée d'un rail (1) à disposer de manière à s'étendre par exemple verticalement, avec une série d'encoches (17) disposées à distance l'une derrière l'autre dans leur sens longitudinal, ainsi que d'un coulisseau (4) fixé de manière mobile le long du rail, présentant des nez d'encoche (10) pouvant s'insérer de manière amovible dans les encoches du rail et pouvant être soulevé manuellement hors des encoches à l'encontre de l'effet d'un ressort, ledit coulisseau présentant, en outre, dirigé transversalement par rapport à son sens de déplacement, un taraudage (12) dans lequel est vissée une vis de fixation (13) du dispositif de renvoi pour ceinture (14), le rail (1) présentant un trou oblong (3) s'étendant le long de celui-ci, et le coulisseau (4) étant fixé sur la partie arrière du rail (1), caractérisée en ce que le coulisseau présente une première partie d'extrémité (6) traversant l'orifice oblong (3), guidé à déplacement longitudinal dans l'orifice oblong (3), et s'appuyant par son extrémité libre sur la face frontale du rail (1), la deuxième partie d'extrémité (9) du coulisseau (4) étant fixée à basculement limité à l'encontre de l'effet d'un ressort autour d'un axe transversal par rapport à l'extension longitudinale du rail (1) et présentant des nez d'encoche (10) coopérant avec le rail (1) et, qu'en outre, sur le coulisseau (4), entre les deux parties d'extrémités (6 + 9), est prévu un deuxième élément de guidage (11) traversant l'orifice longitudinal de rail (3) et présentant un taraudage (12) destiné au raccordement du dispositif de renvoi pour ceinture (14), et en ce que les encoches du rail (1) sont distribuées sur tout le trajet de déplacement du coulisseau (4).

2. Ferrure de renvoi selon la revendication 1, caractérisée en ce que la première partie d'extrémité (6) du coulisseau (4) est tournée vers l'extrémité inférieure du rail (1).

3. Ferrure de renvoi selon la revendication 1 ou 2, caractérisée en ce que le coulisseau (4) est constitué d'une section de tôle essentiellement plane, dont l'épaisseur est inférieure à la largeur de l'orifice oblong (3) du rail, qu'en outre la première partie d'extrémité (6) est formée par un élément en saillie découpé, coudé, ayant la forme d'une tête de marteau, qui traverse l'orifice oblong (3) et repose par sa tête élargie sur la face extérieure du rail (1) et en ce que, sur l'autre élément d'extrémité (9) de la section de tôle, au moins un nez d'encoche (10) en particulier formé, est disposé.

4. Ferrure de renvoi selon une des revendications 1 à 3, caractérisée en ce que le deuxième élément de guidage (11) du coulisseau (4) a la forme d'un manchon, en particulier cylindrique, sortant transversalement de celui-ci, et dont l'alésage axial est configuré comme un taraudage (12).

5. Ferrure de renvoi selon la revendication 4, caractérisée par une manchon formé sur le coulisseau (4).

6. Ferrure de renvoi selon une des revendications 1 à 5, caractérisée en ce qu'une série d'encoches (17) courant le long du rail (1) sont disposées dans le rail (1) de part et d'autre de l'orifice oblong (3) et en ce que deux nez d'encoche (10) placés à distance l'un à côté de l'autre, sortant en direction du rail (1) et adaptés à la position, à la forme et aux dimensions des encoches (17), sont disposés sur la deuxième partie d'extrémité (9) du coulisseau (4).

7. Ferrure de renvoi selon une des revendications 1 à 5, caractérisée en ce que sur le rail (1), de chaque côté de l'orifice oblong (3) sont prévus des éléments de bord longitudinal (18 et 20 respectivement) repliés par rapport au coulisseau (4), dans lesquels sont prévus une série d'encoches découpées (19), réparties à distance l'une derrière l'autre et sur la longueur des éléments de bords longitudinaux, et en ce que, deux nez d'encoche (10) latéraux, tournés l'un vers l'autre sont formés, en particulier, sont découpés, sur le couliseau (4).

8. Ferrure de renvoi selon la revendication 7, caractérisée en ce que les éléments de bords longitudinal (18) du rail (1) sont déformés de manière à donner des rails à encoches.

9. Ferrure de renvoi selon la revendication 7, caractérisée en ce que les deux éléments de bord, courant dans le sens de la longueur (20) de l'orifice oblong (3) sont pliés à angle droit par rapport au coulisseau (4) et dotés d'encoches découpées (19).

10. Ferrure de renvoi selon une des revendications 1 à 9, caractérisée en ce que, sur la section frontale du deuxième élément de guidage (11) ressortant de l'orifice oblong (3) du rail (1) est monté un élément à ressort ayant la forme d'un ressort de compression en spirale, qui d'une part s'appuie sous l'effet de la précontrainte sur la face frontale du rail (1) et d'autre part sur un épaulement (15) saillant latéralement, disposé sur l'extrémité libre du deuxième élément de guidage (11).

11. Ferrure de renvoi selon la revendication 10, caractérisée en ce que l'épaulement (15) est formé par un disque à perçage central plus grand que la section du deuxième élément de guidage (11), qui est fixé sur le deuxième élément de guidage (11) au moyen de la vis serrée (13) dans le taraudage (12) du deuxième élément de guidage (11) et destinée à la fixation du dispositif de renvoi pour ceinture (14).

12. Ferrure de renvoi selon une des revendications 1 à 9, caractérisée en ce que l'élément à ressort (5) est fixé sur la face arrière du coulisseau (4) et s'appuie sous une précontrainte élastique sur une butée (21) déplaçable en longitudinalement de manière synchrone avec le coulisseau (4) sur le rail (7).

13. Ferrure de renvoi selon la revendication 12, caractérisée en ce qu'un ressort à lames est prévu comme élément à ressort (5), et comporte des crochets formés et prenant sur le coulisseau (4).

14. Ferrure de renvoi selon la revendication 13, caractérisée en ce que l'élément à ressort ayant la forme d'un ressort à lames (5) est dirigé transversalement dans le sens de son extension longitudinale par rapport au sens de déplacement du coulisseau (4), la partie centrale s'appuie sur le coulisseau (4), tandis que les parties d'extrémités du ressort à lames sont courbées par rapport à la butée (21) et s'appuient sous la précontrainte du ressort sur la butée (21), qu'en outre, sur la partie centrale de l'élément jouant le rôle de ressort à lames, une nervure (22) est découpée et disposée parallèlement à ce dernier ressort, dont les parties d'extrémités (23) sont pliées l'une vers l'autre dans le même sens et entourent, au moins à fixation par friction, les éléments de bord longitudinal du coulisseau (4).

15. Ferrure de renvoi selon une des revendications 12 à 14, caractérisée en ce que la butée (21), en particulier en matière synthétique, est profilée en U et que dans les faces dirigées l'une vers l'autre des côtés latéraux de la butée, une rainure longitudinale est disposée, en particulier, est formée, dans laquelle les éléments de bord longitudinal du rail (1) s'insèrent à déplacement longitudinal.

16. Ferrure de renvoi selon la revendication 15, caractérisée en ce qu'un boulon (24) fixé dans la butée (21), en particulier dans sa nervure dirigé vers le coulisseau (4) et s'insérant dans un alésage (25) du coulisseau (4), est prévu.

17. Ferrure de renvoi selon une des revendications 1 à 16, caractérisée en ce que la deuxième partie d'extrémité (9) du coulisseau (4) se termine par une aile (9') guidée longitudinalement, dans le trou oblong (3) du rail (1).

18. Ferrure de renvoi réglable en hauteur pour ceinture de sécurité à fixer dans des véhicules à moteur, constituée d'un rail (16) présentant des encoches (17) et d'un coulisseau longitudinal, fixé de manière amovible le long dudit rail et s'insérant à libération par la force d'un ressort dans les encoches du rail et portant un dispositif de renvoi pour ceinture (14), caractérisée en ce qu'une partie d'extrémité (9) du coulisseau (4) est pliée sur l'épaisseur du rail (1'), que le coulisseau (4) présente dans la zone de pliage une ouverture de traversée du rail (26), par laquelle le rail (1') passe de manière telle qu'un des parties d'extrémités pliées (9) du coulisseau (4) s'appuie sur la face frontale du rail (1), tandis que l'autre partie d'extrémité du coulisseau (6) s'appuie sur l'arrière du rail (1'), qu'au moins des nez d'encoches (10) s'insérant dans des trous d'encoche (17) du rail (1) sont disposés sur une partie d'extrémité du coulisseau (6 ou 9 respectivement) et que le dispositif de renvoi pour ceinture (14) est disposé de manière à agir sur le deuxième élément d'extrémité du coulisseau (6).

19. Ferrure de renvoi selon la revendication 18, caractérisée en ce que la première partie d'extrémité de coulisseau (9) est disposée dirigé vers le haut en position d'utilisation.

20. Ferrure de renvoi selon la revendication 18 ou 19, caractérisée en ce que sur les deux parties d'extrémités (6, 9) du coulisseau (4) des nez d'encoches (10) dirigées vers le rail (1') sont disposés, en particulier sont formés et que dans la position de blocage du coulisseau (4) tous les nez d'encoches (10) s'insèrent chacun dans une encoche (17) du rail (1).

21. Ferrure de renvoi selon une des revendications 18 à 20, caractérisée en ce que, en particulier sur les deux parties d'extrémités (6 et 9) du coulisseau (4) sur les faces longitudinales et droites du rail (1), des éléments de guidage droits à insertion mobile en longueur (27) sont disposés, en particulier sont formés.

22. Ferrure de renvoi selon une des revendications 18 à 21, caractérisée en ce que sur le coulisseau (4), en particulier sur sa partie d'extrémité inférieure (6), un étrier formant le dispositif de renvoi pour ceinture (14) est disposé, en particulier, est formé de manière à entourer la face frontale du rail (1').

23. Ferrure de renvoi selon une des revendications 1 à 17, caractérisée en ce que sur le coulisseau (4), une barrette indéformable (30) disposée sur la face avant du rail (1) et à guidage mobile le long du rail (1) est fixée, laquelle présente des parties d'extrémités entourant les deux bords longitudinaux du rail (1) et en ce que le coulisseau (4) est disposé avec sa face avant face à la face arrière de la barrette (30).

24. Ferrure de renvoi selon la revendication 23, caractérisée en ce que la barrette (30) et ses parties d'extrémités entourant les parties du bord longitudinal du rail (1) présentent une longueur correspondant sensiblement au secteur de deux encoches voisines du rail (1) et qu'en particulier, en outre, les parties d'extrémités entourant les éléments de bords longitudinal du rail (1) de la barrette (30) sont disposés au moins à peu près au même niveau que les nez d'encoche (10) du coulisseau (4).

25. Ferrure de renvoi selon la revendication 23 ou 24, caractérisée en ce que la barrette (30) est fixée sur le coulisseau (4) au moyen de la vis de fixation (13) du dispositif de renvoi pour ceinture (14), et notamment de manière telle que la vis de fixation (13) passe dans une traversée (31) de la barrette (30) adaptée à la dite vis et en ce que, sur la vis de fixation (13), un épaulement (32) concourant avec la partie marginale de la traversée de la barrette (30) et limitant le trajet de basculement du coulisseau (4), est disposée.

26. Ferrure de renvoi selon une des revendications 23 à 25, caractérisée en ce que le coulisseau (4) présente deux paires de nez d'encoches (10) disposées à distance l'une derrière l'autre dans le sens d'extension des rails (1).

27. Ferrure de renvoi selon une des revendications 23 à 26, caractérisée en ce que entre la face avant de la barrette (30) et du dispositif de renvoi pour ceinture (14), un élément à ressort (5) ayant la forme d'un ressort à lames et disposé avec une précontrainte est disposé qui présente par rapport à l'orifice oblong (3) du rail (1) des éléments d'extrémité recourbés, traversant l'orifice oblong (3) et s'insérant sur le coulisseau (4).

28. Ferrure de renvoi selon la revendication 27, caractérisée en ce que l'élément à ressort configuré sous forme de ressort à lames (5) présente au milieu environ de son extension longitudinale une traversée par laquelle passe la vis de fixation (13) du dispositif de renvoi pour ceinture (14).

29. Ferrure de renvoi selon la revendication 27 ou 28, caractérisée en ce que l'élément à ressort configuré sous forme de ressort à lames (5) est plié à angle obtu à peu près au centre de son extension longitudinale et s'appuie par l'arrête de pliage (33) sur la face avant de la barrette (30), qu'en outre les deux côtés latéraux du ressort à lames s'étendent chacun au-dessus de la barrette (30) et se terminent par des crochets pliés (34) traversant l'orifice oblong (3) du rail (1) qui sont crochetés dans les traversées (35) du coulisseau (4).

30. Ferrure de renvoi selon une des revendications qui précèdent, caractérisée en ce que le rail (1) et l'orifice oblong (3) et les encoches (17) sont formés par les éléments d'une poutre creuse de véhicule (36) et que dans la poutre creuse du véhicule (36) une ouverture de montage de coulisseau (37) est disposée à proximité de l'orifice oblong.

31. Ferrure de renvoi selon la revendication 30, caractérisée en ce que le rail (1), l'orifice oblong (3) et les encoches (17) ainsi que l'ouverture de montage du coulisseau (37) sont formés sur la face essentiellement plane de la poutre creuse du véhicule (36) laquelle est parallèle au flanc voisin du véhicule et est tournée vers l'intérieur du véhicule.

32. Ferrure de renvoi selon la revendication 30 ou 31, caractérisée en ce que l'ouverture de montage de coulisseau (37) est disposée en dessous de l'orifice oblong (3) et des encoches (17, 19) et à distance de ces dernières.

33. Ferrure de renvoi selon la revendication 32, caractérisée en ce que l'ouverture de montage du coulisseau (37) est formée de façon à entrer dans les côtés de la poutre creuse du véhicule (36) qui sont raccordées à la face dans laquelle l'orifice oblong (3) et les encoches (17) sont disposées.

34. Ferrure de renvoi selon une des revendications 30 à 33, caractérisée en ce que dans l'orifice oblong (3), à proximité de la partie d'extrémité qui fait face à l'ouverture de montage du coulisseau (37), aboutissent deux fentes disposées au même niveau l'une par rapport à l'autre, opposées l'une à l'autre, s'étendant à angle droit par rapport à l'orifice oblong (3), et à configuration symétrique (38), lesdites fentes formant avec l'orifice oblong (3) une ouverture de passage pour la partie d'extrémité (6) correspondant au profil de la partie d'extrémité (6) en forme de tête de marteau du coulisseau (4).

35. Ferrure de renvoi selon une des revendications 30 à 34, caractérisée en ce que dans la poutre creuse du véhicule (36), une plaque de renforcement (39) disposée sans jeu est fixée sur la face arrière de la paroi de la poutre creuse du véhicule présentant l'orifice oblong (3) et les encoches (17), plaque qui-présente des traversées correspondant à l'orifice longitudinal (3) et aux encoches (17) et disposées de façon à coïncider avec ceux-ci.

36. Ferrure de renvoi selon la revendication 35, caractérisée en ce que la plaque de renforcement (39) présente des éléments de bord longitudinal (40) pliés vers l'intérieur.

Fig.1
1
2
2
3
4
5
6
7
8
9
10
10
11
12
13
14
15
16
17
17
Fig.2
1
2
2
3
4
5
6
7
8
9
10
10
11
12
13
14
15
16
18
18
19

Fig.3
Fig.4
Fig.5
1
2
3
4
5
6
7
8
9
10
11
12
13
14
15
16
17
19
20
V

Fig.6
VII
2
1
17
5
9'
10
9
23
10
4
11
24
21
17
6
8
17
3
2
VII
Fig.7
2
1
VIII
17
9'
9
12
21
13
5
4
14
24
11
25
VIII
6
3
9'
5
9
23
23
22
Fig.8
22
22
25
4
6
8

Fig.9
1'
17
17
28
4
29
14
Fig.11
1'
28
10
27
9
4
26
5
6
27
10
29
17
14
17
Fig.10
1'
17
17
17
10
10
28
27
4
27
26
27
10
10
27
14
29

Fig.12
XIII
2
35
g'
34
10
10
30
5
12
10
10
33
XIV
XIV
35
6
8
8
34
17
17
3
1
2
XIII
Fig.13
1
2
9'
20
34
10
12
13
4
31
10
30
32
35
33
5
8
34
14
3
2
Fig.14
13
14
32
5
10
10
30
1
30'
17
31
12
4
17
30'

Fig.15
36
17
17
3
38
38
37
4
5
6
Fig.17
40
39
40
36
17
3
38
38
Fig.16
17
17
3
38
38
36
37